# FASCICULE DE BREVET EUROPEEN

(11) **EP 1 142 315 B1**
(45) Date de publication et mention de la délivrance du brevet: **28.04.2010**
(21) Numéro de dépôt: 99961102.3
(22) Date de dépôt: 17.12.1999
(51) Int. Cl.: H04N 5/272

(54) **SYSTEME D'INSERTION VISUELLE DANS UNE SEQUENCE VIDEO**
ANORDNUNG ZUR VISUELLEN EINFÜGUNG IN EINER VIDEOSEQUENZ
IMAGE INSERTION SYSTEM IN A VIDEO SEQUENCE

(30) Priorité: 18.12.1998 US 215274
(43) Date de publication de la demande: 10.10.2001
(73) Titulaire: EVS International (Swiss) Sàrl, 1700 Fribourg (CH)
(72) Inventeur: BRUNO, Pierre, F-75011 Paris (FR); MEDIONI, Gérard, Guy, Los Angeles, CA 90035 (US); GRIMAUD, Jean-Jacques, Portola Valley, CA 94028 (US)
(74) Mandataire: Loisel, Bertrand
(86) Numéro de dépôt international: PCT/FR1999/003183
(87) Numéro de publication internationale: WO 2000/038416

(56) Documents cités:
- WO-A-95/12282
- WO-A-97/02699
- WO-A-98/24242
- FR-A- 2 730 837

## Description

La présente invention concerne les systèmes d'insertion virtuelle dans une séquence vidéo et, en particulier, un système qui permet d'effectuer l'insertion virtuelle en aval du site d'origine dans la chaîne de distribution d'un programme de télévision.

Les termes "système d'insertion virtuelle" décrivent un système qui remplace, dans une séquence vidéo d'une scène (par exemple provenant d'une caméra vidéo ou d'un enregistreur), une région ou zone cible de l'image vidéo par un modèle de remplacement approprié, apte à être inséré dans la région cible, par exemple une représentation d'un modèle mémorisé. La séquence vidéo peut par exemple être un match de football ou une course de stock car avec des panneaux commerciaux dans la scène. Le processus d'insertion virtuelle comporte le remplacement de la "cible", par exemple un panneau particulier de publicité pour un premier produit, dans la scène, par une représentation d'un panneau différent, faisant une publicité d'un second produit, de sorte qu'un produit commercial différent fait l'objet d'une publicité dans la scène. Cela peut être fait de façon que la partie substituée s'adapte pratiquement sans solution de continuité dans l'image de base et qu'un spectateur ne puisse constater qu'il s'agit d'un remplacement.

Dans des systèmes d'insertion virtuelle existants, une représentation de la cible, c'est-à-dire la partie sélectionnée de la scène qui doit être remplacée, est mise en mémoire. La position, la taille et la perspective de la cible sont calculées. Le modèle mémorisé est transformé géométriquement pour l'adapter à la taille et à la perspective estimées de la cible correspondante dans l'image courante de la scène, pour l'adapter aux propriétés radiométriques de la cible. Finalement, le modèle transformé est inséré dans l'image courante pour remplacer la cible. Le modèle transformé n'a pas besoin d'être une image échantillon ; il peut être un élément graphique à deux ou trois dimensions, animé ou non. Des systèmes de ce type sont décrits par exemple dans les brevets US n° 5 264 933, 5 363 392, 5 436 672 et 5 543 856 et le brevet français n° 94-05895 auxquels on pourra se reporter pour avoir une description plus complète du processus d'insertion virtuelle.

Les systèmes d'insertion virtuelle appartiennent à deux types de base, les systèmes à caméra instrumentée et les systèmes à reconnaissance d'image. Le procédé utilisé pour obtenir une estimation de la position, de la taille et de la perspective d'une cible change suivant que la caméra est instrumentée ou non. Dans un système instrumenté, on utilise des capteurs pour mesurer les paramètres de fonctionnement de la caméra, tels que l'azimut, l'élévation, la mise au point et le zoom (pan, tilt, focus et zoom). L'emplacement, la taille et la perspective de la cible sont déterminés à partir des sorties des capteurs. Si les caméras ne sont pas instrumentées, on utilise la reconnaissance d'image pour détecter et poursuivre la ou les zones appropriées des images courantes de la scène pour obtenir les paramètres requis et la ou les zones à remplacer en temps réel.

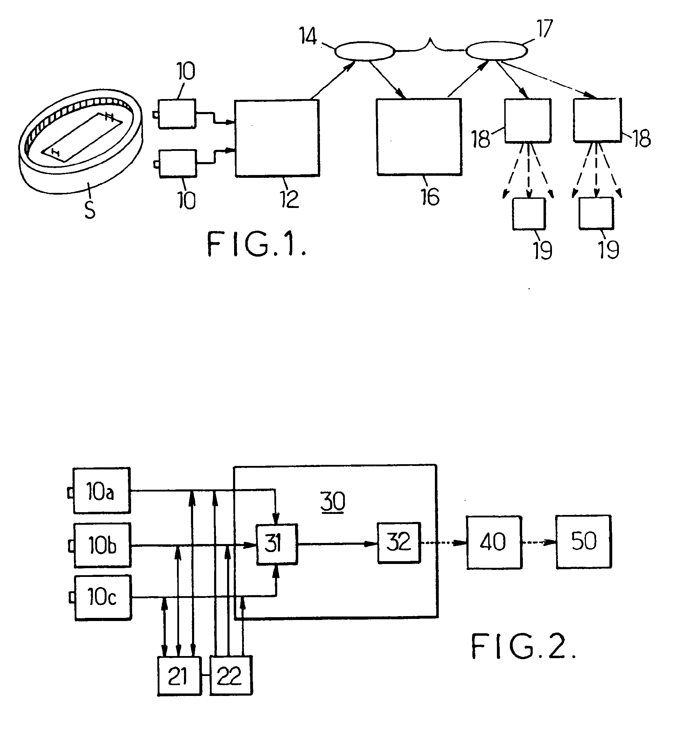

La figure 1 indique schématiquement la chaîne de distribution typique d'un programme de télévision. Plusieurs caméras 10 sont mises au point sur une scène S et transmettent ce que l'on appelle une alimentation "propre propre" ou "clean clean", sans éléments graphiques ou effets spéciaux, à une salle ou camion de contrôle mobile 12, généralement placé sur le site de l'événement. La salle de contrôle 12 sélectionne l'image qui sera diffusée en utilisant un multiplexeur ou un module de commutation. Le multiplexeur génère aussi un signal codé, appelé signal "tally" identifiant la caméra qui est utilisée pour produire cette image particulière. Pour des raisons économiques et esthétiques, seules certaines caméras sont instrumentées par des capteurs et la fermeture du "tally" des caméras indique quelle caméra est active ou sur l'air à tout instant donné. Des signaux peuvent également être générés pour indiquer si une couche graphique déterminée ou un effet spécial est utilisé à un instant donné. Suivant la terminologie habituelle, une alimentation "clean clean" ne contient que les signaux de la caméra tandis qu'une alimentation "clean" contient une couche graphique et/ou un effet spécial (par exemple une rediffusion au ralenti). A l'aide d'un équipement vidéo standard, la salle de contrôle peut ajouter des couches graphiques et/ou des effets spéciaux pour fournir l'image finale. On appelle "alimentation sale" ou "dirty feed" une alimentation contenant l'image fournie par la caméra plus toutes les couches graphiques et effets spéciaux, qui est envoyée au studio du réseau 16 via un satellite 14. Le rôle principal du studio de réseau est de diffuser les images, via un satellite 17, à des stations filles 18. Ces stations, à leur tour, diffusent les images vers le public, indiqué par des récepteurs de télévision individuels 19.

Dans quelques systèmes commerciaux actuels, on utilise les caméras en mode commuté, le traitement d'image étant effectué "avant" le multiplexeur ou le commutateur. Dans ces systèmes antérieurs, le directeur dans la salle de contrôle mobile peut choisir entre deux signaux provenant de la caméra A, le signal A et le signal A' qui est un signal antérieurement traité sur le site et retardé par rapport au signal A.

Plusieurs approches différentes ont été utilisées pour effectuer l'insertion virtuelle ou sont potentiellement utilisables en ce qui concerne l'emplacement où on effectue l'insertion virtuelle. Une première approche, qu'on appellera système monocaméra voie montante (uplink) et qui est montrée en figure 2, utilise un système ou configuration dans lequel le système d'insertion virtuelle est sur site ; les images vidéo (et éventuellement les données de capteurs) sont traitées localement sur site, c'est-à-dire sont envoyées à la salle de contrôle ou au camion d'un diffuseur extérieur placé sur le site et elles sont traitées là. C'est l'approche habituelle dans quelques systèmes d'insertion virtuelle commerciaux.

Sur la figure 2, les caméras 10a, 10b et 10c sont reliées à un multiplexeur 31 et un système de traitement d'image 21 est placé entre les caméras et le multiplexeur 31. La figure 2 vise à couvrir le cas générique, c'est-à-dire les caméras instrumentées et non. Un signal d'image et un signal de sortie des capteurs seront prévus pour chaque caméra instrumentée. Un seul système de traitement d'image soit montré, mais il y a habituellement un processeur par chaque caméra. Un module d'insertion virtuelle 22 du type décrit ci-dessus remplace la partie appropriée (la cible) de l'image vidéo par le modèle, par exemple par la publicité souhaitée. Dans son implémentation commerciale, un module d'insertion virtuelle séparé est associé à chaque caméra, que la caméra soit ou non sur l'air, de façon à produire une alimentation distincte utilisée dans le reste de la chaîne. Les modules d'insertion virtuelle 22 sont sur site et raccordés à chaque caméra, lorsqu'on utilise plus d'une caméra. Le directeur dans la salle de contrôle a le choix entre une image "clean clean" provenant directement de la caméra et une image retardée après traitement par le système de traitement d'image 21 et le module d'insertion virtuelle 22 ; le multiplexeur 31 permet de les commuter. Le multiplexeur 31 est placé dans une salle de contrôle mobile ou un camion 30 avec un équipement vidéo standard 32. L'équipement vidéo 32 est utilisé pour ajouter des couches graphiques, des effets spéciaux et des effets ne provenant pas de la caméra, tels qu'une répétition, aux images de sortie provenant du multiplexeur 31. Les images sont envoyées au studio de réseau 40 et relayées aux stations filles 50. Des inconvénients de cette approche sont qu'il faut un système d'insertion visuelle ou de remplacement pour chaque caméra et l'opération d'insertion visuelle doit être effectuée sur site, ce qui exige des techniciens en nombre élevé sur le site.

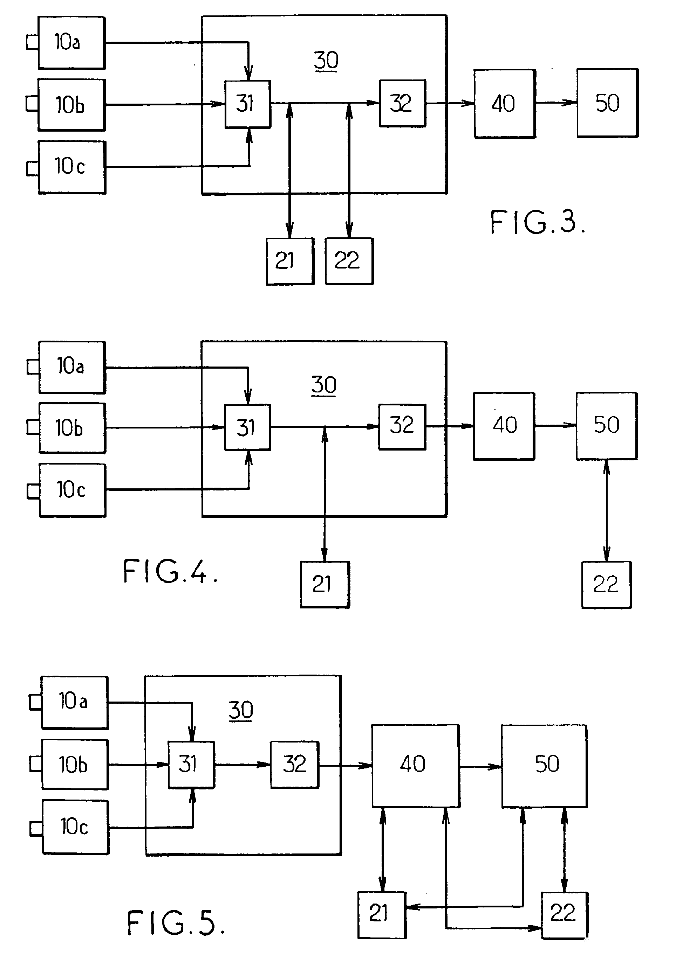

La figure 3, où les éléments correspondant à ceux montrés en figure 2 portent les mêmes numéros de référence, montre une configuration multicaméra voie montante. Dans cette configuration, le module d'insertion virtuelle 22 est placé dans un camion sur site et il admet des entrées provenant de caméras multiples (par exemple les caméras 10a, 10b et 10c) et il traite l'alimentation "propre" de la caméra active, identifiée par le "tally" provenant de la' salle de contrôle mobile 30. Dans la réalisation montrée schématiquement en figure 3 on utilise un module de reconnaissance de forme du système de traitement d'image 21 pour déterminer la zone cible à remplacer ; dans d'autres réalisations, on utilise des caméras instrumentées ; des signaux de données provenant des capteurs de caméra, c'est-à-dire les signaux de pan, tilt, zoom et focalisation sont envoyés directement par les caméras 10a, 10b et 10c au module d'insertion virtuelle 22. Le flot vidéo modifié produit par le module d'insertion virtuelle 22 est renvoyé à la salle de contrôle mobile ou au camion 30 et l'équipement vidéo 22 insère les couches graphiques et les effets spéciaux ; en variante, le module d'insertion virtuelle utilise des couches graphiques et effets spéciaux provenant de la salle de contrôle 30 pour générer une alimentation "sale" dirigée vers le studio de réseau 40.

La figure 4 montre un système voie montante/voie descendante. Les éléments correspondante portent encore les mêmes numéros de référence que sur la figure 2. Dans ce système, le traitement d'insertion virtuelle est fractionné en deux parties. Si on effectue un traitement d'image, on le réalise sur site comme indiqué par le module de traitement d'image 21. Toutes les autres étapes sont effectuées dans la salle de contrôle mobile ou le camion 30, exception faite de l'insertion effective. Les informations nécessaires pour effectuer l'insertion (remplacement de la cible, pixels masqués, etc.) sont codées dans la salle de contrôle mobile 30 et transmises au studio de réseau 40. L'insertion virtuelle est effectuée au studio ou en aval, comme indiqué par l'emplacement du système d'insertion 22. Le modèle inséré peut être différent pour chacune des stations filles 50 si on le souhaite (brevet FR 94-05895). Des procédés pour protéger l'information codée sont décrits dans le brevet US 5 543 856, ainsi qu'un système maître-esclave, dans lequel le système maître effectue la reconnaissance d'image et la détection et fournit l'information concernant l'emplacement précis de l'image insérée, tandis que le système esclave effectue l'insertion.

L'invention vise à fournir un système "mi-trajet" ou "midlink" dans lequel les données d'entrée et de commande nécessaires sont collectées sur site et transportées à un emplacement éloigné où l'insertion virtuelle est effectuée sur l'alimentation "sale" provenant du site.

Une architecture de ce type est décrite dans le document FR 2730837.

Suivant un aspect de l'invention, il est proposé un système de télévision conforme à la revendication 1.

Dans un mode particulier de réalisation, les moyens de traitement de l'image diffusée sont placés dans une salle de contrôle mobile placée sur site avec au moins une dite caméra et est prévue pour fournir en sortie les images vidéo correspondantes sous forme numérique, constituant une alimentation diffusée.

Avantageusement le système comporte plusieurs caméras activables et des moyens pour déterminer laquelle des caméras est couramment active et pour produire une sortie correspondante et les moyens d'insertion virtuelle remplacent une partie cible de l'image vidéo provenant de la caméra active, indiquée par cette sortie.

Des moyens de routage sont avantageusement placés séparément de la salle de contrôle mobile. Durant le calibrage du système, ils reçoivent l'alimentation diffusée et dirigent individuellement des alimentations provenant des différentes caméras et fournissant sélectivement en sortie l'une des alimentations. Les moyens de routage sont utilisés pour faciliter la sélection d'une cible ou de cibles au cours d'un processus de calibrage pour chaque caméra avant diffusion, par exemple pour ajuster des niveaux de "key" lorsqu'un procédé d'écran bleu est utilisé.

Lorsque le système comporte plusieurs caméras, des moyens sont avantageusement prévus pour générer des signaux de fermeture de caméra pour indiquer celle des caméras qui est active et pour surveiller les signaux de fermeture de caméra et déterminer si un signal de fermeture de caméra a été reçu pour la caméra dont l'image vidéo est en cours de réception par les moyens d'insertion virtuelle.

Le système comporte avantageusement de plus des moyens de surveillance pour surveiller les éléments graphiques et les effets spéciaux ajoutés pour produire les images vidéo de l'alimentation diffusée et pour produire une sortie indiquant une image vidéo reçue par les moyens d'insertion virtuelle ne doit pas être modifiée, en se fondant sur la nature des éléments graphiques et des effets spéciaux qui ont été ajoutés à l'image vidéo reçue. Les moyens de surveillance peuvent produire cette sortie lorsque l'un des effets spéciaux ajoutés est incompatible avec le modèle de remplacement. Dans un autre mode, les moyens de surveillance fournissent cette sortie lorsqu'un effet spécial a été ajouté aux images reçues à traiter. Les moyens de surveillance peuvent aussi produire cette sortie lorsqu'une couche quelconque des éléments graphiques ajoutés est incompatible avec le modèle de remplacement.

Il peut y avoir plusieurs caméras instrumentées ayant chacune des capteurs associés qui produisent des données opérationnelles concernant la caméra respective ; le système comprend alors des moyens pour envoyer ces données opérationnelles aux moyens d'insertion virtuelle en vue du remplacement de la partie cible d'une image vidéo de l'alimentation diffusée par un modèle de remplacement compatible avec les données opérationnelles. Ces données opérationnelles peuvent concerner les caractéristiques de caméra dites pan, tilt, focus et zoom.

Suivant un autre aspect encore de l'invention, le système de télévision est conforme à la revendication 9.

Les moyens de contrôle locaux comprennent avantageusement de plus des moyens pour déterminer laquelle des caméras est couramment active et pour fournir une sortie correspondante et les moyens d'insertion virtuelle reçoivent un signal de contrôle sur la base de cette sortie et, en réponse au signal, remplacent la partie cible de l'image vidéo de l'alimentation diffusée provenant de la caméra active.

Dans une réalisation avantageuse, la salle de contrôle mobile comporte des moyens pour générer des signaux de fermeture de caméra indiquant laquelle des caméras est active et les moyens de contrôle locaux comprennent des moyens de contrôle logique destinés à surveiller les signaux de fermeture de caméra pour déterminer si un signal de fermeture de caméra est reçu pour la caméra dont les images vidéo sont couramment reçues par les moyens d'insertion virtuelle et envoyer un signal de contrôle correspondant aux moyens d'insertion virtuelle. Les moyens de contrôle logique peuvent fournir une sortie indiquant que la seconde de deux caméras dans le temps est active lorsque les signaux de sortie provenant d'une caméra temporellement première et d'une caméra temporellement seconde sont reçus en même temps.

Les moyens de contrôle locaux comprennent avantageusement des moyens de contrôle logique.

D'autres caractéristiques de l'invention apparaîtront à la lecture de la description détaillée de modes préférés de réalisation qui suit.

Dans les dessins :
la figure 1 est un schéma synoptique d'une chaîne de distribution représentative de programme de télévision ;
- les figures 2, 3 et 4 sont des représentations synoptiques de systèmes d'insertion virtuelle antérieurs ;
- la figure 5 est un synoptique d'un système d'insertion virtuelle suivant l'invention ;
- la figure 6 est un synoptique montrant en détail la partie sur site du système de la figure 5, implémenté suivant un premier mode de réalisation ; et
- la figure 7 est un synoptique d'une portion de la partie sur site de la figure 6, implémenté dans une variante.

La figure 5, similaire aux figures 2 à 4 et dans laquelle les éléments correspondants portent les mêmes numéros de référence, montre les éléments fondamentaux d'un système "midlink" suivant l'invention. Les données sont collectées au site d'origine et amenées à un studio de réseau, ou à un autre endroit, et y sont traitées, à distance, en temps réel. Contrairement à la configuration "uplink/downlink" de la figure 4, tous les traitements nécessaires pour l'insertion virtuelle sont effectués en aval du site d'origine.

Les caméras 10a, 10b, 10c de la figure 5 peuvent être instrumentées ou non. Les signaux vidéo sont envoyés à une salle de contrôle mobile sur site. La salle de contrôle 30 comporte un multiplexeur 31 utilisé pour sélectionner celles des images de caméra qui seront diffusées et un équipement de traitement vidéo classique 32 pour ajouter des effets spéciaux et/or des éléments graphiques aux images de la caméra.

Après traitement de signal, on transmet plusieurs signaux, décrits ci-dessous, de la salle de contrôle mobile 30 à l'emplacement éloigné et/ou au module d'insertion virtuelle 22. Dans l'exemple représenté, ces signaux sont transmis au studio de réseau 40, puis au module d'insertion virtuelle 22 (bien que ce module 22 puisse être placé au studio). Un des signaux transmis contient une information concernant les effets spéciaux appliqués à l'image ; chacun des autres signaux correspond à une seule couche de graphiques. Si la caméra active n'est pas instrumentée, les paramètres de la cible, c'est-à-dire la surface de remplacement de la publicité, sont obtenus à l'aide d'un module de reconnaissance de forme du module de traitement d'image 21. Si la caméra active est instrumentée, les données des capteurs de la caméra sont également transmis au module d'insertion virtuelle 22. La substitution du modèle graphique mémorisé à la cible dans l'image vidéo est effectuée directement par le module d'insertion virtuelle 22.

On peut employer plusieurs configurations différentes du système. On peut par exemple effectuer l'insertion virtuelle sur le signal qui traverse le noeud de contrôle du réseau (studio de réseau 40). Le signal résultant est envoyé alors aux stations filles 50. L'opération peut également être effectué au niveau de la station ou des stations filles. Une combinaison des deux méthodes peut être utilisée, comme indiqué en figure 5, où le traitement d'image est effectué sur le signal reçu par le studio de réseau 40 et l'insertion virtuelle effectuée aux stations filles. Des insertions multiples différentes sont possibles à chacune des stations filles, comme dans le système "uplink/downlink" de la figure 4.

Un aspect important est que les images traitées proviennent d'un "dirty feed" contenant toutes les couches graphiques et effets spéciaux. Dans un système à caméras multiples, deux "tallys" peuvent se fermer en même temps, par suite du retard lié à la commutation entre les caméras et à l'imprécision du retard à la fermeture du "tally" qui indique celle des caméra qui est sur l'air. Si deux "tallys" se ferment au même instant, la position de la cible, c'est-à-dire l'emplacement de la publicité qui est à insérer, risque d'être incorrectement détectée. Le système de l'invention détermine celle des caméras qui est active en utilisant une logique, par exemple suivant un algorithme, tel que si la caméra A était active et que des signaux de "tally" sont reçus et indiquent que les caméras A et B sont actives, on suppose que c'est la caméra B qui est active ensuite. L'algorithme simple peut être implémenté sous forme matérielle ou logicielle et il résout les problèmes accompagnant le traitement du "tally" dans de nombreuses salles de contrôle mobiles lorsque le signal de fermeture ne retombe pas immédiatement et produit une ambiguïté concernant celle des caméras qui est effectivement active.

L'invention conserve les avantages du système de la figure 4 et permet le traitement à distance du flot vidéo en aval de la salle de contrôle mobile. La capacité de traitement du flot vidéo à distance est offerte par la transmission numérique du signal, qui garantit la qualité du flot vidéo, contrairement à une transmission analogique qui se dégrade à chaque passage par un satellite. En utilisant l'alimentation "sale", les images sont traitées en aval du multiplexeur ou commutateur 31 ; en utilisant la logique simple mentionnée plus haut, il n'y a pas de problème de synchronisme de "tally".

Avantageusement, le signal vidéo entrant n'est traité que si les conditions suivantes sont remplies : le "tally" d'une caméra est fermé ; il n'y a pas d'effets spéciaux sur l'air et il n'y a pas de couche graphique capable d'affecter le processus (par exemple un graphique bleu lorsque le système utilise un écran bleu pour les occlusions).

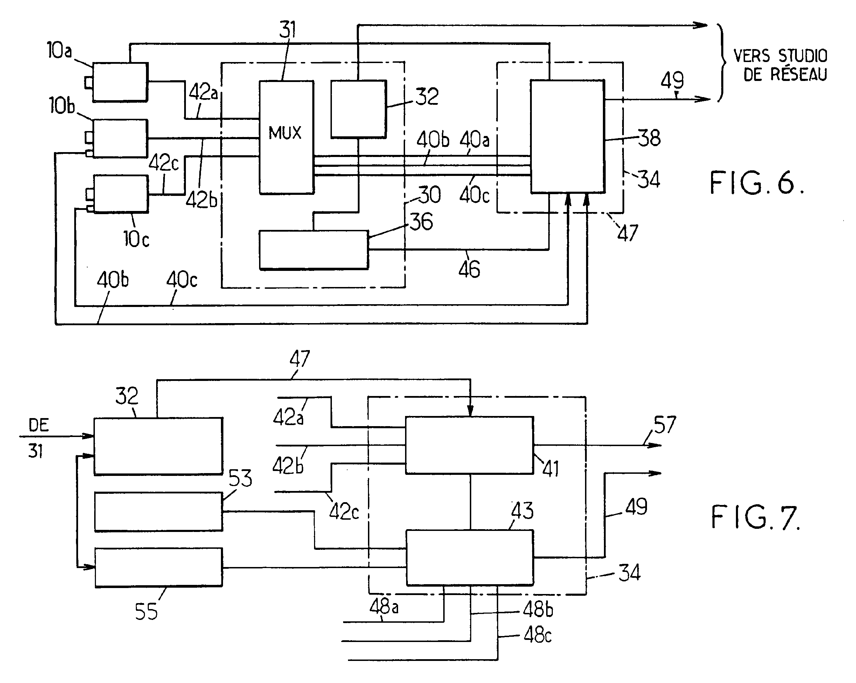

La figure 6 montre des détails supplémentaires d'un mode avantageux de réalisation du système midlink. Les caméras 10a, 10b et 10c sont instrumentées et ont des lignes de données 40a, 40b et 40c reliées à un module de contrôle local 34 où le processus d'insertion virtuelle est normalement effectué. Mais le module 34 effectue des fonctions très simplifiées, comme on va le voir. Des câbles triaxiaux 42a, 42b et 42c, qui transportent l'alimentation de la caméra et les signaux d'image, relient les caméras respectives à la salle de contrôle mobile 30. Les câbles 42a, 42b et 42c peuvent aussi être connectés directement au module de contrôle local 34 pour fournir un signal "clean clean" mais ce n'est pas le cas dans le mode préféré.

Un multiplexeur classique 31 est relié à l'équipement vidéo classique 32 qui ajoute les graphiques et effets spéciaux prévus. Etant donné que le terme "multiplexeur" suggère un fonctionnement automatique, on peut mieux qualifier le module 31 de commutateur ou routeur car en général le module effectue les commutations entre les sorties de caméra sous la commande d'un directeur dans la salle ou camion.

La salle de contrôle 30 comporte également un interface de processeur graphique (GPI) 36 relié à l'équipement vidéo 32 et produisant des signaux de sortie fondés sur les couches graphiques et les effets spéciaux (mouvement lent par exemple) ajoutés au signal d'image vidéo. Les signaux GPI sont transmis par une ligne GPI 46 à l'entrée du module de contrôle local 34. De plus, les signaux de "tally" des caméras 10a, 10b et 10c sont envoyés au module 34 sur des lignes de sortie respectives 48a, 48b et 48c.

Le multiplexeur 31 fournit sur une ligne de sortie 47, en coopération avec l'équipement vidéo 32, un signal diffusé, un signal élaboré "dirty feed" qui contient les couches graphiques et les effets spéciaux ajoutés au signal d'image vidéo transmis sous forme numérique aux structures de réseau 40. Si la salle de contrôle est prévue pour fournir un signal analogique, on effectue une conversion analogique-numérique. Le module 40 représenté est un studio de réseau, mais le signal diffusé peut être envoyé à un studio de service de production ou à un autre type de commande, puis renvoyé au studio de réseau proprement dit. Une liaison satellite est montrée en figure 1 mais d'autres liaisons, par exemple optiques, peuvent être utilisées.

Dans l'exemple considéré, le composant clé du module de contrôle local 34 est l'ensemble routeur (commutateur) et module logique 38. La fonction de base du module de contrôle local 34 est de déterminer quelle caméra est active à partir des signaux de "tally" sur les lignes 48a, 48b et 48c et de transmettre l'information avec les signaux de données (de capteur) pour la caméra active ainsi que l'information concernant les graphiques et les effets spéciaux depuis le GPI 36. Un circuit simple est inclus dans le module routeur et logique 34 pour utiliser l'algorithme qui détermine quelle caméra est active. Dans une réalisation avantageuse, le signal vidéo entrant (signal diffusé) est traité lorsque des conditions sont remplies : "tally" de la caméra fermé, pas d'effets spéciaux sur l'air et pas de couche graphique pouvant affecter le processus d'insertion virtuelle. Les signaux de "tally" permettent la première détermination tandis que les signaux GPI permettent les deux dernières. La décision de ne pas traiter peut être faite au GPI ou au module de contrôle local 34 ou même à un emplacement aval (par exemple au studio de réseau) à partir de la sortie du module de commutation logique 38 apparaissant sur l'accès de sortie 49. Dans un mode de réalisation, la décision de traiter est prise au GPI 36 qui a trois états différents, un état "off" (GPI arrêté) et deux états "on". Dans les états "on", le GPI détermine si les graphiques ou effets spéciaux sont incompatibles avec le traitement à effectuer ; dans un premier état "on", il produit un signal "traiter" et dans l'autre état "on", il produit un signal "ne pas traiter". Les signaux de données sont utilisés pour déterminer la cible à remplacer.

Dans une variante montrée en figure 7, où un routeur ou commutateur 41 et un module de contrôle logique 43 sont représentés séparément dans un but de clarté, le signal diffusé sur la ligne 47 est envoyé au routeur 41 du module de contrôle local 34 et, avec les signaux vidéo de caméra, sur des câbles triaxiaux 42a, 42b et 42c respectivement associés aux caméras 10a, 10b et 10c. Le routeur est utilisé, au cours du calibrage du système, pour effectuer une commutation entre les caméras individuelles 10a, 10b et 10c et l'alimentation diffusée ou de programme. La ligne de sortie 57 est utilisée pour envoyer sélectivement une des images de caméra ou le signal de programme à l'emplacement éloigné (par exemple le studio 40) pour traitement. On n'utilise pas un canal séparé pour le signal diffusé comme sur la figure 6. Ce routage à distance des images de caméra aide à calibrer le système et permet une présélection de la couleur d'occlusion (chroma key). Au cours du calibrage, on fait varier tous les paramètres de fonctionnement de la caméra entre leurs valeurs extrêmes ; par exemple, on effectue un panoramique dans toute la plage de mouvement entre les limites, on affecte des valeurs linéaires aux positions de la caméra sur toute la plage et on génère des signaux à codage temporel correspondants. De plus, pour les caméras instrumentées, on effectue un calibrage préliminaire sur une image de caméra fixe pour définir la cible ou les cibles intéressantes. Après cette étape initiale, les signaux de données sont envoyés à distance, puis utilisés dans le processus d'insertion virtuelle. Le routeur 41 est utilisé lors de la diffusion du programme : seul le signal diffusé est envoyé alors.

Dans le mode de réalisation de la figure 7, on insère des signaux concernant les couches graphiques et les effets spéciaux, c'est-à-dire les effets vidéo numériques (tels que fondu, fondu enchaîné, ralenti, etc.) séparément dans le module de contrôle logique 43, comme indiqué par le module graphique séparé 53 et le module 55 d'effets vidéo numériques (DVE). Le signal de ce dernier est utilisé comme signal de fermeture de "tally" : une des broches de "tally" est affectée au signal DVE et le module logique 43 sait que le DVE est actif lorsque la broche est à la masse. Contrairement au mode de réalisation précédent, le signal de graphiques est avantageusement un signal à deux états (on-off).

Un avantage de l'invention est la réduction de coût possible, par comparaison avec les systèmes commerciaux actuels à canaux séparés. Cette réduction rend le système plus flexible et permet d'effectuer des opérations d'insertion visuelle sur des programmes moins cotés (par exemple un match de boxe par comparaison avec le Super Bowl). Les réductions portent sur les dépenses liées à la présence sur site de personnel non requis dans le système de l'invention, puisque l'insertion virtuelle est effectuée à distance.

De plus, le module de contrôle local est très simplifié et les coûts associés, par exemple conditionnement d'air, fourniture de puissance et conducteur, sont évités.

L'invention n'est pas limitée à des cas particuliers, tels le remplacement d'un panneau publicitaire par un autre et l'information à ajouter peut être insérée sur des surfaces ouvertes ou nues, par exemple sur l'eau, le sable ou un terrain ouvert. L'information peut comporter des indications sur l'événement. Pour la natation par exemple, le nom des nageurs et les pays qu'ils représentent peuvent être superposés aux couloirs.

L'invention est également applicable à la télévision sur Internet, où elle sera particulièrement aisée à mettre en oeuvre lorsque la norme MPEG 4 sera appliquée, car cette norme permet l'insertion dans le signal de descriptifs de la scène et de la segmentation d'objets (demande FR 98 02781). Dans ce cas, les moyens de traitement d'image sur site introduisent dans le flot vidéo compressé et codé des indications définissant la cible, par exemple les coordonnées des quatre coins en cas de panneaux en forme de parallélogramme. Une semi-transparence peut être prévue, en transmettant des coefficients de mélange en profondeur correspondant à chaque plan. Le programme de télévision ainsi traité peut être mémorisé sur un serveur éloigné accessible par un réseau utilisant un protocole de genre Internet. La substitution d'un modèle à la cible peut être effectuée au niveau du serveur, par une régie publicitaire. En rendant les signaux de définition accessibles à l'internaute, ce dernier peut insérer un modèle de son choix, à condition qu'il soit compatible avec la forme de la cible.

## Revendications

1. Système de télévision pour remplacer une région cible dans des images vidéo successives par un modèle assorti insérable dans la région cible, ce système comprenant :
- au moins une caméra de télévision (10a, 10b, 10c) pour produire une séquence d'image vidéo d'une scène ;
- des moyens de traitement d'images diffusées pour recevoir les images vidéo et ajouter sélectivement des couches de graphiques et d'effets spéciaux aux images vidéo pour produire une alimentation à diffuser ;
- des moyens d'insertion virtuelle (22), éloignés des moyens de traitement d'images diffusées, destinés à recevoir l'alimentation à diffuser et à modifier l'alimentation diffusée en remplaçant une région cible des images vidéo par un modèle de remplacement adapté ; et
des moyens de surveillance des éléments graphiques et effets spéciaux ajoutés pour produire les images vidéo de l'alimentation diffusée et de production d'une sortie indiquant qu'une image vidéo reçue par les moyens d'insertion virtuelle ne doit pas être modifiée, en se fondant sur la nature des éléments graphiques et des effets spéciaux ajoutés à l'image vidéo.

2. Système suivant la revendication 1, **caractérisé en ce que** les moyens de traitement d'image sont placés dans une salle de contrôle sur le site de la caméra et l'alimentation diffusée est constituée par des images vidéo sous forme numérique.

3. Système suivant la revendication 1 ou 2, **caractérisé en ce que** le système comporte plusieurs caméras (10a, 10b,10c) activables et des moyens pour déterminer laquelle des caméras est couramment active et pour produire une sortie correspondante et les moyens d'insertion virtuelle remplacent la partie cible de l'image vidéo provenant de la caméra active, à partir de cette sortie.

4. Système suivant la revendication 1, 2 ou 3, **caractérisé en ce que** des moyens de routage sont placés séparément de la salle de contrôle mobile pour, durant un calibrage du système, recevoir l'alimentation diffusée et diriger individuellement des alimentations provenant des différentes caméras et pour fournir sélectivement en sortie l'une des alimentations.

5. Système suivant la revendication 2, à plusieurs caméras, **caractérisé en ce qu'**il comporte des moyens pour générer des signaux de fermeture de caméra pour indiquer celle des caméras qui est active et des moyens pour surveiller les signaux de fermeture de caméra et déterminer si un signal de fermeture de caméra a été reçu pour la caméra dont l'image vidéo est en cours de réception par les moyens d'insertion virtuelle.

6. Système suivant la revendication 1 ou 2, **caractérisé en ce qu'**il a plusieurs caméras instrumentées ayant chacune des capteurs associés qui produisent des données opérationnelles concernant la caméra respective et le système comprend de plus des moyens pour envoyer ces données opérationnelles aux moyens d'insertion virtuelle en vue du remplacement de la partie cible d'une image vidéo de l'alimentation diffusée par un modèle de remplacement compatible avec les données opérationnelles.

7. Système suivant la revendication 6, **caractérisé en ce** les données opérationnelles concernent les caractéristiques de caméra dites panoramique, inclinaison, focus et zoom.

8. Système de télévision pour remplacer une région cible dans des images vidéo successives par un modèle assorti insérable dans la région cible, comprenant :
- plusieurs caméras de télévision (10a, 10b, 10c) qui, lorsqu'elles sont actives, produisent une séquence d'images vidéo d'une scène ;
- des capteurs pour chacune des caméras, détectant plusieurs paramètres opérationnels associés avec la caméra respective et produisant des données de sortie respectives ;
- une salle de contrôle mobile placé sur le site des caméras et comportant des moyens de traitement d'image destinés à recevoir les images vidéo et à ajouter des couches d'éléments graphiques et des effets spéciaux aux images vidéo afin de produire des images vidéo résultantes, des moyens pour fournir en sortie les images vidéo résultantes sous forme numérique pour constituer une alimentation diffusée et des moyens de contrôle locaux placés sur site ainsi que la chambre de contrôle mobile, destinés à recevoir les données de sortie des capteurs et à fournir un signal de données de sortie ;
- des moyens d'insertion virtuelle, placés à distance des caméras, de la salle de contrôle et des moyens de contrôle locaux, destinés à recevoir l'alimentation diffusée et le signal de données et à modifier les images vidéo de l'alimentation diffusée en remplaçant une partie cible des images vidéo par un modèle de remplacement adapté à l'insertion dans la partie cible ;
les moyens de contrôle locaux comportant des moyens logiques pour surveiller les éléments graphiques et effets spéciaux ajoutés pour produire les images vidéo de l'alimentation diffusée et pour fournir une sortie indiquant qu'une image vidéo reçue par les moyens d'insertion virtuelle ne doit pas être modifiée, en se fondant sur la nature des éléments graphiques et des effets spéciaux ajoutés à l'image vidéo reçue.

9. Système selon la revendication 8, dont les moyens de contrôle locaux comportent des moyens pour déterminer laquelle des caméras est couramment active et pour produire une sortie correspondante et dont les moyens d'insertion virtuelle reçoivent une signal de commande fonction de cette sortie et remplacent la partie cible de l'image vidéo de l'alimentation diffusée provenant de la caméra identifiée comme active.

10. Système selon la revendication 9, **caractérisé en ce que** les moyens de contrôle locaux comportent des moyens de routage pour, durant un calibrage du système, recevoir l'alimentation diffusée et diriger individuellement des alimentations provenant des différentes caméras et pour fournir sélectivement en sortie l'une des alimentations.

11. Système selon la revendication 8, **caractérisé en ce que** la salle de contrôle mobile comporte des moyens pour générer des signaux de fermeture de caméra pour indiquer celle des caméras qui est active et des moyens pour surveiller les signaux de fermeture de caméra et déterminer si un signal de fermeture de caméra a été reçu pour la caméra dont l'image vidéo est en cours de réception par les moyens d'insertion virtuelle et pour envoyer un signal correspondant aux moyens d'insertion virtuelle.

12. Système selon la revendication 8, **caractérisé en ce que** les moyens de contrôle logique fournissent une sortie indiquant que la seconde de deux caméras dans le temps est active lorsque les signaux de sortie provenant d'une caméra temporellement première est d'une caméra temporellement seconde sont reçus en même temps.

13. Système selon la revendication 1 ou 8, **caractérisé en ce que** la sortie est produite lorsque un effet spécial ajouté est incompatible avec le modèle de remplacement ou lorsqu'un effet spécial quelconque a été ajouté à l'image reçue pour traitement ou encore lorsqu'une couche quelconque d'éléments graphiques ajoutés est incompatible avec le modèle de remplacement.

## Claims

1. Television system for replacing a target region in successive video images by a matching pattern suitable for insertion in the target region, said system comprising:
- at least one television camera (10a, 10b, 10c) for producing a video image sequence of a scene;
- broadcast image processing means for receiving video images and selectively adding graphics and special effects layers to the video images to produce a feed to be broadcast;
- virtual insertion means (22), at a distance from the broadcast image processing means, for receiving the feed to be broadcast and modifying the broadcast feed by replacing a target region of the video images by a suitable replacement pattern; and
- means for monitoring graphics and special effects items added to produce the video images of the broadcast feed and for producing an output specifying that a video image received by the virtual insertion means is not to be modified, using the nature of the graphics and special effects items added to the video image.

2. System according to claim 1, **characterised in that** image processing means are positioned in a control room on the site of the camera and the broadcast feed consists of video images in digital format.

3. System according to claim 1 or 2, **characterised in that** the system comprises a plurality of cameras (10a, 10b, 10c) suitable for activation and means for determining which of the cameras is currently active and for producing a corresponding output and virtual insertion means replacing the target portion of the video image from the active camera, using said output.

4. System according to claim 1, 2 or 3, **characterised in that** routing means are positioned separately from the mobile control room for, during system calibration, receiving the broadcast feed and routing feeds from the various cameras individually and outputting one of the feeds selectively.

5. System according to claim 2, with a plurality of cameras, **characterised in that** it comprises means for generating camera shutting signals to specify which of the cameras is active and means for monitoring the camera shutting signals and determining whether a camera shutting signal has been received for the camera for which the video image is currently being received by the virtual insertion means.

6. System according to claim 1 or 2, **characterised in that** it has a plurality of instrumented cameras each having associated sensors producing operational data relating to the respective camera and the system further comprises means for sending said operational data to the virtual insertion means with a view to the replacement of the target portion of a video image of the feed broadcast by a replacement pattern compatible with the operational data.

7. System according to claim 6, **characterised in that** the operational data relate to the pan, tilt, focus and zoom features of the camera.

8. Television system for replacing a target region in successive video images by a matching pattern suitable for insertion in the target region, comprising:
- a plurality of television cameras (10a, 10b, 10c) which, when active, produce a video image sequence of a scene;
- sensors for each of the cameras, detecting a plurality of operational parameters associated with the respective camera and producing respective output data;
- a mobile control room positioned on the site of the cameras and comprising image processing means for receiving video images and adding graphics and special effects layers to the video images to produce resulting video images, means for outputting the resulting video images in digital format to form a broadcast feed and local control means positioned on site and the mobile control room, for receiving the output data from the sensors and supplying an output data signal;
- virtual insertion means, positioned at a distance from the cameras, the control room and the local control means, for receiving the broadcast feed and the data signal and modifying the video images of the broadcast feed by replacing a target portion of the video images by a replacement pattern suitable for insertion in the target portion;
- local control means comprising logical means for monitoring graphics and special effects items added to produce the video images of the broadcast feed and for producing an output specifying that a video image received by the virtual insertion means is not to be modified, on the basis of the nature of the graphics and special effects items added to the video image received.

9. System according to claim 8, wherein the local control means comprise means for determining which of the cameras is currently active and for producing a corresponding output and wherein the virtual insertion means receive a control signal dependent on said output and replacing the target portion of the broadcast image from the camera identified as active.

10. System according to claim 9, **characterised in that** the local control means comprising routing means for, during system calibration, receiving the broadcast feed and routing feeds from the various cameras individually and outputting one of the feeds selectively.

11. System according to claim 8, **characterised in that** the mobile control room comprises means for generating camera shutting signals to specify which of the cameras is active and means for monitoring the camera shutting signals and determining whether a camera shutting signal has been received for the camera for which the video image is currently being received by the virtual insertion means.

12. System according to claim 8, **characterised in that** the logical control means supply an output specifying that the second of two cameras over time is active when the output signals from a temporally first camera and from a temporally second camera are received at the same time.

13. System according to claim 1 or 8, **characterised in that** the output is produced when an added special effect is incompatible with the replacement pattern or when any special effect has been added to the image received for processing when any layer of added graphics items is incompatible with the replacement pattern.

## Patentansprüche

1. Fernsehsystem zum Ersetzen einer Zielregion in aufeinander folgenden Videobildern durch ein in die Zielregion einfügbares, zugeordnetes Modell, dieses System umfassend:
- wenigstens eine Fernsehkamera (10a, 10b, 10c) um eine Sequenz von Videobildern einer Szene zu produzieren;
- Bearbeitungsmittel für ausgestrahlte Bilder, um die Videobilder zu empfangen und den Videobildern selektiv Grafik- und Spezialeffekt-Ebenen hinzuzufügen, um eine auszustrahlende Einspeisung zu produzieren;
- Mittel zur virtuellen Einfügung (22), die von den Bearbeitungsmitteln für ausgestrahlte Bilder entfernt sind, und die dazu bestimmt sind, die auszustrahlende Einspeisung zu empfangen und die ausgestrahlte Einspeisung zu verändern, indem eine Zielregion der Videobilder durch ein angepasstes Ersatzmodell ersetzt wird, und
- Überwachungsmittel für die hinzugefügten Grafikelemente und Spezialeffekte, um die Videobilder der ausgestrahlten Einspeisung zu produzieren, und zur Produktion einer Ausgabe, die angibt, dass ein von den Mitteln zur virtuellen Einfügung empfangenes Videobild nicht verändert werden soll, gegründet auf die Natur der dem Videobild hinzugefügten Grafikelemente und Spezialeffekte.

2. System nach Anspruch 1, **dadurch gekennzeichnet, dass** die Bildbearbeitungsmittel in einem Kontrollraum an dem Standort der Kamera angeordnet sind, und die ausgestrahlte Einspeisung aus Videobildern in numerischer Form gebildet ist.

3. System nach Anspruch 1 oder 2, **dadurch gekennzeichnet, dass** das System mehrere aktivierbare Kameras (10a, 10b, 10c) umfasst, und Mittel, um zu bestimmen, welche der Kameras derzeit aktiv ist, und um eine entsprechende Ausgabe zu produzieren, und wobei die Mittel zur virtuellen Einfügung den Zielbereich des von der aktiven Kamera kommenden Videobilds ausgehend von dieser Ausgabe ersetzen.

4. System nach Anspruch 1, 2 oder 3, **dadurch gekennzeichnet, dass** Routing-Mittel separat von dem mobilen Kontrollraum angeordnet sind, um, während einer Kalibrierung des Systems, die ausgestrahlte Einspeisung zu empfangen und um von verschiedenen Kameras kommende Einspeisungen individuell zu lenken, und um selektiv die eine der Einspeisungen als Ausgabe zu liefern.

5. System nach Anspruch 2, mit mehreren Kameras, **dadurch gekennzeichnet, dass** es Mittel umfasst, um Kamera-Schließ-Signale zu erzeugen, um diejenige der Kameras anzugeben, die aktiv ist, und Mittel um die Kamera-Schließ-Signale zu überwachen und zu bestimmen, ob ein Kamera-Schließ-Signal für die Kamera empfangen worden ist, deren Videobild gerade von den Mitteln zur virtuellen Einfügung empfangen wird.

6. System nach Anspruch 1 oder 2, **dadurch gekennzeichnet, dass** es mehrere mit Instrumenten ausgestattete Kameras umfasst, von denen jede zugeordnete Sensoren aufweist, die Betriebsdaten erzeugen, welche die jeweilige Kamera betreffen, und das System weiter Mittel umfasst, um diese Betriebsdaten an die Mittel zur virtuellen Einfügung zu senden, im Hinblick auf das Ersetzen des Zielbereichs eines Videobilds der ausgestrahlten Einspeisung durch ein Ersatzmodell, das kompatibel zu den Betriebsdaten ist.

7. System nach Anspruch 6, **dadurch gekennzeichnet, dass** die Betriebsdaten die Eigenschaften der Kamera, bezeichnet als Panorama, Neigung, Fokus und Zoom, betreffen.

8. Fernsehsystem, um eine Zielregion in aufeinander folgenden Videobildern durch ein in die Zielregion einfügbares, zugeordnetes Modell zu ersetzen, umfassend:
- mehrere Fernsehkameras (10a, 10b, 10c), die, wenn sie aktiv sind, eine Sequenz von Videobildern einer Szene produzieren;
- Sensoren für jede der Kameras, die mehrere Betriebsparameter, die der jeweiligen Kamera zugeordnet sind, erfassen und jeweilige Ausgabedaten produzieren;
- einen mobilen Kontrollraum, der an dem Standort der Kameras angeordnet ist und Bildbearbeitungsmittel umfasst, die dazu bestimmt sind, die Videobilder zu empfangen und den Videobildern Ebenen von Grafikelementen und Spezialeffekten hinzuzufügen, um resultierende Videobilder zu produzieren, Mittel um die resultierenden Videobilder in numerischer Form als Ausgabe zu liefern, um eine ausgestrahlte Einspeisung zu bilden, und lokale Steuer-/Regelmittel, die an dem Standort wie der mobile Kontrollraum angeordnet sind, und die dazu bestimmt sind, die Ausgabedaten der Sensoren zu empfangen und ein Ausgabedaten-Signal zu liefern;
- Mittel zur virtuellen Einfügung, die von den Kameras, dem Kontrollraum und den lokalen Steuer-/Regelmitteln entfernt angeordnet sind, und die dazu bestimmt sind, die ausgestrahlte Einspeisung und das Datensignal zu empfangen, und die Videobilder der ausgestrahlten Einspeisung zu verändern, indem ein Zielbereich der Videobilder durch ein Ersatzmodell ersetzt wird, das zur Einfügung in den Zielbereich angepasst ist;
- wobei die lokalen Steuer-/Regelmittel Logikmittel umfassen, um die hinzugefügten Grafikelemente und Spezialeffekte zu überwachen, um die Videobilder der ausgestrahlten Einspeisung zu produzieren, und um eine Ausgabe zu liefern, die angibt, dass ein von den Mitteln zur virtuellen Einfügung empfangenes Videobild nicht verändert werden soll, gegründet auf die Natur der dem empfangenen Videobild hinzugefügten Grafikelemente und Spezialeffekte.

9. System nach Anspruch 8, dessen lokale Steuer-/Regelmittel Mittel umfassen, um zu bestimmen, welche der Kameras derzeit aktiv ist, und um eine entsprechende Ausgabe zu erzeugen, und dessen Mittel zur virtuellen Einfügung ein Steuersignal als Funktion dieser Ausgabe empfangen und den Zielbereich des Videobilds der ausgestrahlten Einspeisung ersetzen, die von der als aktiv identifizierten Kamera kommt.

10. System nach Anspruch 9, **dadurch gekennzeichnet, dass** die lokalen Steuer-/Regelmittel Routing-Mittel umfassen, um, während einer Kalibrierung des Systems, die ausgestrahlte Einspeisung zu empfangen und um von verschiedenen Kameras kommende Einspeisungen individuell zu lenken, und um die eine der Einspeisungen selektiv als Ausgabe zu liefern.

11. System nach Anspruch 8, **dadurch gekennzeichnet, dass** der mobile Kontrollraum Mittel umfasst, um Kamera-Schließ-Signale zu erzeugen, um diejenige der Kameras anzugeben, die aktiv ist, und Mittel, um die Kamera-Schließ-Signale zu überwachen und zu bestimmen, ob ein Kamera-Schließ-Signal für die Kamera, deren Videobild gerade von den Mitteln zur virtuellen Einfügung empfangen wird, empfangen worden ist, und um ein entsprechendes Signal an die Mittel zur virtuellen Einfügung zu senden.

12. System nach Anspruch 8, **dadurch gekennzeichnet, dass** die Mittel zur Logik-Steuerung/Regelung eine Ausgabe liefern, die angibt, dass die zweite von zwei Kameras zur Zeit aktiv ist, wenn die von einer temporär ersten Kamera und von einer temporär zweiten Kamera kommenden Ausgabesignale zur gleichen Zeit empfangen werden.

13. System nach Anspruch 1 oder 8, **dadurch gekennzeichnet, dass** die Ausgabe erzeugt wird, wenn ein hinzugefügter Spezialeffekt inkompatibel mit dem Ersatzmodell ist oder wenn irgend ein Spezialeffekt dem Bild hinzugefügt worden ist, das zur Bearbeitung empfangen wurde, oder wenn irgend eine Ebene von hinzugefügten Grafikelementen inkompatibel mit dem Ersatzmodell ist.
